# EUROPEAN PATENT SPECIFICATION

(11) **EP 1 664 731 B1**
(45) Date of publication and mention of the grant of the patent: **22.02.2012**
(21) Application number: 04757919.8
(22) Date of filing: 19.03.2004
(51) Int. Cl.: G01N 9/00

(54) **RESONATOR SENSOR ASSEMBLY**
RESONATOR-SENSOR-EINHEIT
ENSEMBLE RESONATEUR-DETECTEUR

(30) Priority: 21.03.2003 US 456517 P
(43) Date of publication of application: 07.06.2006
(73) Proprietor: MEAS France, 31100 Toulouse (FR)
(72) Inventor: KOLOSOV, Oleg, San Jose, CA 95129 (US); MATSIEV, Leonid, San Jose, CA 94063 (US); VARNI, John, F., Los Gatos, CA 95032 (US); DALES, G. Cameron, Saratoga, CA 95070 (US)
(74) Representative: Feray, Valérie
(86) International application number: PCT/US2004/008531
(87) International publication number: WO 2004/086002

(56) References cited:
- GB-A- 2 067 009
- US-A- 4 644 803
- US-A- 5 477 726
- US-A- 5 592 130
- US-A- 5 918 354
- US-A1- 2002 074 897
- US-B1- 6 182 499

## Description

### Claim of Priority

This application claims the benefit of U.S. Provisional Application No. 60/456,517 filed on March 21, 2003.

### Technical Field

The present invention relates generally to the assembly of sensing devices, and more particularly to the packaging of fluid condition sensors such as for the sensing of synthetic or natural petroleum fluids.

### Background

U.S. Provisional Application Serial No. 60/419,404, (entitled "Machine Fluid Sensor and Method"; filed Octbber 18, 2002) discloses improved machine fluid sensors and methods. There is a need for the ability to package sensing devices so that they can withstand their operating conditions. Exemplary applications in which these sensors may be used In engines in general, automobiles, heavy machinery, military equipment, airplane parts, oil drilling, exploration and production well logging, oil refining, pipeline and quality control applications, marine transportation, sub-sea exploration and aerospace related equipment, or any other fluid containing application. In general, sensors for these applications will include very small components that need to be able to withstand harsh operating environment conditions. The ability to assemble such devices efficiently using automated materials handling equipment is also important.

Document US 5918354 discloses a piezoelectric resonator which is formed of an element piece including a piezoelectric material and an electrode formed on the surface of the piezoelectric material.

Document GB 2067009 relates to an encapsuled piezoelectric resonator having a casing comprising a cover and a body sealed together by means of an organic adhesive.

Document US 5592130 discloses a resin mold type piezoelectric oscillator comprising a piezoelectric oscillator having outer leads, a semiconductor integrated circuit for electrically oscillating the piezoelectric oscillator, and a lead frame formed sunstantially in a plane for mounting the piezoelectric oscillator and integrated circuit, the lead frame having connection pads for connecting to the outer leads of the piezoelectric oscillator.

Document US 2002/0074897 relates to a microbeam oscillator. Tuning of the oscillator is carried out by addition or subtraction of material to an oscillator member in order to change the mass of the oscillator member.

These documents do not disclose the claimed method and package.

### Summary of the Invention

In general, the present invention meets the above needs by providing an improved method that includes the steps as defined in claim 1.

A highly preferred sensor of the present invention includes a resonator, and more preferably a tuning fork resonator.

Among other advantages, the present invention affords the ability to provide improved sensor assemblies for a number of different applications. The sensor assemblies of the present invention thus preferably include at least one and more preferably a combination of two or more of the following:
- operates for long periods of time (e.g., at least 3 months, and more preferably at least 1 year or longer) over a temperature range of -40°C. to 170°C and more preferably -60°C to 300°C, without compromise to the material sensor performance characteristics;
- provides protection to fragile components that are typically small (e.g., smaller than 5 mm, and in some instances having a smallest dimension that is smaller than 1 mm), in harsh environments such as environments that include corrosive media, abrasive media, or combinations thereof;
- provides a packaged device that is compact (e.g., smaller than about 15 cm³, having a footprint of less than about 40 cm², and more preferably smaller than • about 10 cm³, having a footprint of less than about 20 cm²), which can be used alone or combined with other components, such as an application specific integrated circuit (ASIC) onto a common platform (e.g., a lead frame or the like);
- includes individual or modular components that can be readily handled by automated materials handling equipment, such as components including a flat surface for handling by "pick and place" robots; or
- includes structure that permits for calibration of the sensor against a material having a known characteristic or for initializing the sensor upon introduction of a new fluid.

Accordingly, it can be seen that the present invention provides a solution for a number of competing technological challenges; notably, for example, the preparation of an assembly in which a sensor having a free portion with a sensing surface is incorporated onto a platform, components of the sensor are physically shielded from harsh operating conditions, the requisite space is maintained between the free portion of the sensor and the platform, and the sensing surface of the sensor remains exposed for sensing.

### Brief Description of the Drawings

FIG. 1 is a side section view of a sensor of the present invention taken from the assembly of FIG. 2;

FIG. 2 is a perspective view of the sensor of FIG. 2 depicting an illustrative housing configuration;

FIG. 3 is a side section view of a sensor of the present invention, shown coupled with another component and sharing a common platform, and also including an optional protective layer;

FIG. 4 is a top sectional view of an assembly in accordance with the present invention to illustrate the use of a removable barrier for temporary use while applying a protective layer to components of a sensor In accordance with the present invention;

FIGS. 5a-5d illustrate (with side sectional views) a sequence of steps employed for applying a protective layer to components of a sensor in accordance with the present invention, in which a consumable barrier is employed;

FIGS. 6a-6e illustrate (with side sectional views) a sequence of steps employed for assembling another sensor in accordance with the present invention;

FIG. 7 illustrates a side view of a sensor of the present invention attached directly to an ASIC device; and

FIG. 8a-8d illustrate (with side sectional views) a sequence of steps employed for assembling yet another sensor in accordance with the present invention.

### Detailed Description of the Preferred Embodiment

The present invention is predicated upon the discovery of methods for assembling a sensor that includes a sensing element that requires exposure over at least a portion of its outer surface to ambient conditions. More particularly, the present invention is predicated upon the discovery of methods for assembling a fluid sensor that includes a resonator sensing element that requires exposure over at least a portion of its outer surface to the fluid it is sensing.

The method of the present invention generally includes the steps as defined in claim 1.

In a particularly preferred embodiment, which is illustrated herein by description of a tuning fork resonator as the sensing element, a coated or uncoated tuning fork resonator is provided and has tines that are free to resonate upon application of an input signal (e.g., a varying frequency Input signal). The resonator is attached to a platform in a manner that maintains the tines spaced from the platform. A protective layer is applied over the resonator (other than over the tines) and the platform. It should be appreciated that even though the present invention is illustrated with reference to a tuning fork resonator (e.g., having two, three or more tines), the invention is not so limited. For example, the features herein may be employed with respect to any of a number of types of sensors, including for example, cantilevers, unimorphs, bi-morphs, membrane resonators, torsional resonators, or other mechanical resonators. The invention may also have suitable application with respect to thickness shear mode resonators, surface acoustic wave devices, pressure sensing devices, or ultrasonic transducers.

Examples of resonators and the manner of using them for sensing characteristics of a fluid are taught for example, in U.S. Patent Nos. 6,336,353 and 6,182,499.

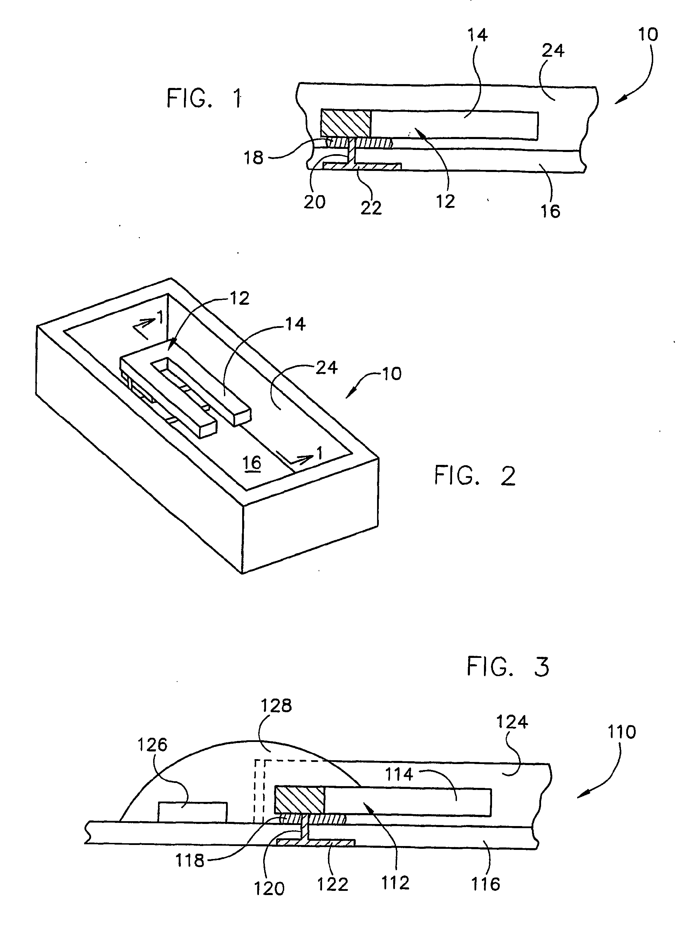

Fig. 1 illustrates one example of an approach to packaging a resonator to form an assembly 10 in accordance with the present invention. The assembly 10 includes a resonator 12 having a free portion 14. A base platform 16 supports the resonator, by way of a suitable support 18, which may be formed as part of the base platform 16, added as a separate layer (e.g., a layer of dielectric material (e.g., a polymer, a ceramic or combination thereof), an adhesive such as an epoxy, or the like) or otherwise provided so that the free portion is spaced from the base platform over at least a portion of the length of the resonator. The assembly is preferably provided with a suitable structure adapted for receiving a signal. For example, in one embodiment, a conductive path 20 joins a contact 22 with the resonator (e.g., via a bonded or soldered joint with an electrode (not shown) associated with the resonator.

The structure of the conductive path and the contact is not critical, and it is possible to combine the two into a single structure. For example, it is possible that the conductive path may include a wire that is attached to an electrode of the resonator. Alternatively, using techniques common in the manufacture of semiconductor devices, a via may be formed in the base platform 16 and filled with a wire or conductive metal. The contact may be a wire. It may also be a conductive trace applied by a suitable metallization process (e.g., plating, physical vapor deposition, chemical vapor deposition, plasma deposition, coating, spraying, or the like). It may also be possible to laminate with or without an adhesive.

Though FIG. 1 depicts a structure by which the conductive path extends through a base, it will be appreciated that the invention is not so limited, and the path can extend through or around any wall, e.g., wall 24 of the assembly. The wall may be any suitable material, and preferably is a material similar in electrical characteristics to the material of the base platform 16 (e.g., a ceramic, a polymer or a combination thereof).

In FIG. 2, there is shown an example of a more complete housing structure in which the assembly 10 includes a plurality of walls 24 that substantially surround the resonator. Though shown as generally orthogonally disposed continuous, flat walls, of course, the invention is not so limiting, the walls can assume any shape as desired. They may include discontinuities, e.g., grooves, wells, apertures, slits, windows or some other surface irregularity. The walls may be curved, be configured as a polygon other than a rectangle, or combinations thereof. In a preferred embodiment, there is a cut-out defined in the housing structure so that at least the free end 14 of the resonator 12 is exposed. For example, as seen in FIG. 2, a top wall may be omitted from covering all or a portion of an upper portion of the housing structure to render at least a portion of the resonator exposed to ambient.

In another embodiment, an assembly including a resonator, such as the assembly in FIG. 1 may be combined with one or more other devices, and be carried together by a common platform. For examples, it is contemplated that a resonator assembly may be packaged in combination with an ASIC and be carried by a common platform. With reference to FIG. 3, there is shown one such example in which an assembly 110, including a resonator 112 having a free portion 114. A base platform 116 having a conductive path (which in this illustration is shown connected with a contact 122, but need not be, as described above) forms a surface upon which a support 118 may be disposed for the resonator 112. A wall 124 substantially surrounds the resonator 112, white at least partially exposing at least a portion of the resonator to ambient.

Also shown in FIG. 3 is an additional electronic component 126 (e.g., an ASIC). In FIG. 3 there is also shown an optional protective layer 128 that may be applied to encapsulate at least a portion of the assembly. It will be appreciated that a similar protective layer may be employed over the various other alternative assemblies of the present invention as well, such as over the assembly 10 of FIG. 1. it is not only limited to the assembly 110 of FIG. 3.

The protective layer 128 may be any suitable protective layer. For example, it may be a coating that is sprayed, brushed or otherwise applied over the assembly; it may also include an overmolded plastic layer, a layer that is laminated, or combinations of two or more of coatings, overmolded layers, or laminated layers may also be employed.

It is found that in instances where it is desired to employ a protective layer, and the need remains to maintain the free portion of the resonator exposed to , ambient, there is a need to selectively apply the protective layer to the assembly so that components needing protection from harsh environments will be coated, while still keeping the free portion of the resonator exposed. In order to accomplish this, any of a number of suitable selective application techniques may be employed, such as the employment of a removable protective barrier to prevent protective layer materials from contacting the free portion of the resonator. The removable protective barrier is thus positioned over the assembly to block the portions of the assembly requiring the protective layer from the portions that do not require the layer. The protective layer is then applied and the barrier is removed.

The protective barrier may take any suitable configuration, but preferably is selected from a re-usable barrier or a consumable barrier. For example, it might be possible to employ a photoresist over a portion of the assembly, selectively remove portions thereof, apply the protective material and then remove remaining photoresist.

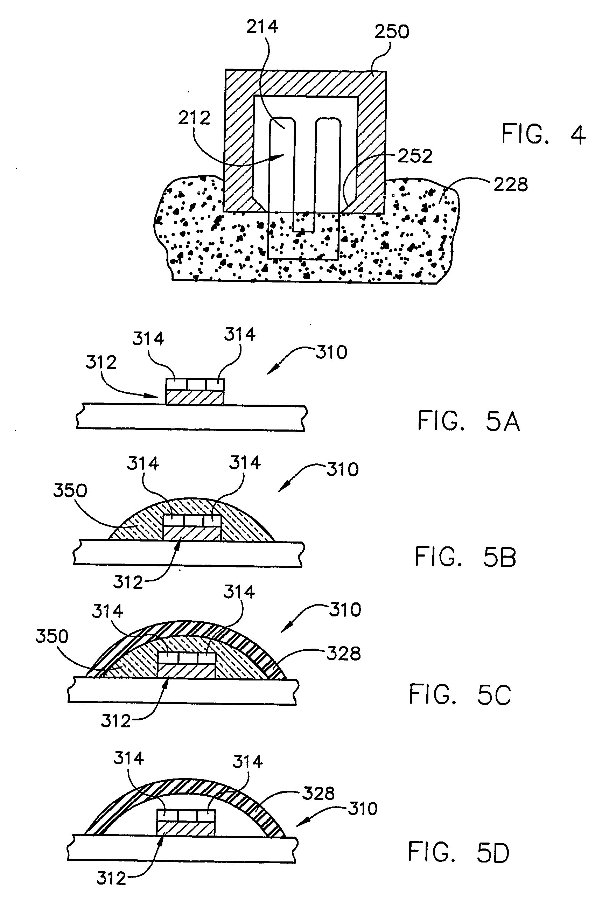

FIG. 4 is a top sectional view of a resonator assembly 210 in which a reusable barrier 250 is employed to surround a resonator 212 over a free portion 214, while a protective layer 228 is applied. The re-usable barrier may be any suitable material. However, preferably it is a relatively soft material that will not plastically deform the resonator if it contacts the resonator. It may include one or more knife edges 252, membranes, walls or the like at any suitable location (e.g., a knife edge seal along an inner periphery) to help sealingly surround the resonator during application of the protective layer. It should be appreciated that though the barrier of this embodiment may be re-usable, it need not be, particularly if to do so would compromise the quality of the resulting assembly. The re-usable barrier may be manually handled, or handled by an automated Instrument for placement purposes. In a variation within this embodiment, one or a plurality of the barriers may be placed on a robot arm, which precisely brings the barrier (or barriers) Into proper position relative to the resonator.

FIGS. 5a-5d illustrate a sequence of steps that may be employed, pursuant to which the removable protective barrier is a consumable barrier. In FIG. 5a there is shown an assembly 310, that includes a resonator 312 having tines defining a free portion 214. The resonator sits on a platform 318. In FIG. 5b, a consumable barrier layer 350 is applied over the resonator of the assembly of FIG. 5a. in the step depicted in FIG. 5c, a protective layer 328 is applied over the consumable barrier layer 350. in FIG. 5d, the consumable layer has been removed. Leaving the protective layer 328 in spaced relation from the resonator 312.

In yet another embodiment it may be possible to employ a hybrid approach to the approach of FIGS. 4 and 5a-5d. For example, a shell may be formed in situ to surround the resonator. Upon conclusion of application of the protective layer, the shell may be removed, such as by breaking it at a weakened region (e.g., a scored location).

It is preferable that any consumable barrier material that is used be relatively inert to the material of the resonator and any associated hardware so that no damage arises as a result of the method. In this regard, any of a number of different materials may be employed as the consumable layer. For example, the material of the consumable barrier may be a material that can be dissolved, decomposed or otherwise broken down into particles for removal from the volume of space between the resonator and any resulting protective layer. Thus, the consumable barrier material may be selected from polymers (synthetic, biological, thermoplastic, thermoset, or combinations thereof), starches, waxes, salts or other dissolvable crystals, low melting point metals, or another sacrificial material that is capable of withstanding in its solid state the processing conditions for applying the protective layer, and thereafter being removable from the assembly without physically deforming or otherwise contaminating the resonator.

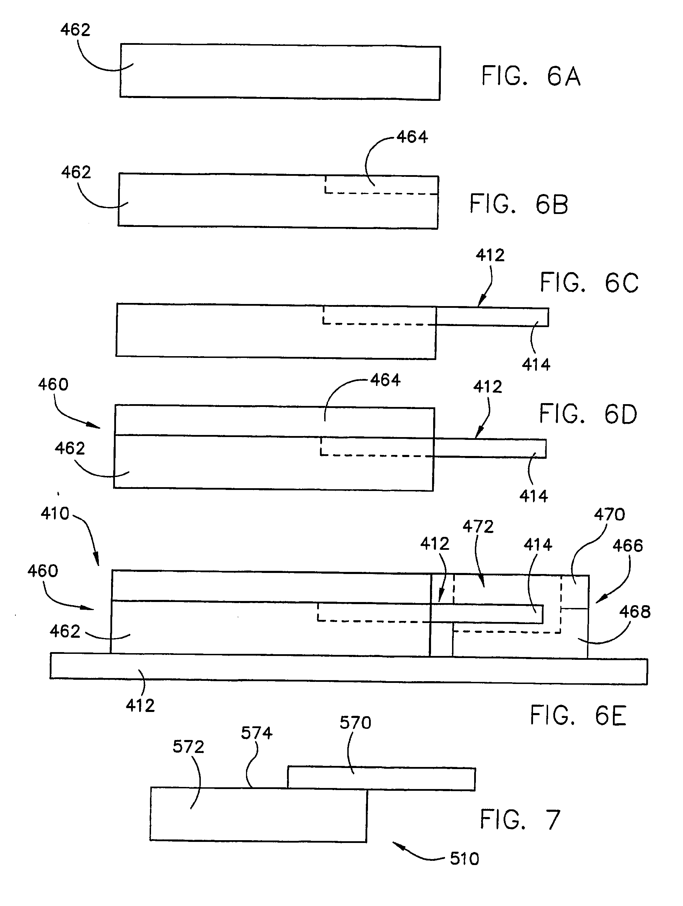

Turning now to the embodiment shown in FIGS. 6a-6e, there is shown another approach to the fabrication of an assembly 410 in accordance with the present invention. In the resulting assembly of this embodiment, a resonator 412 has a free portion 414 that extends away from a multi-layer holder 460. A first layer 462 is provided as shown in FIG. 6a. A trench 464 is formed in or on the first layer, as seen In FIG. 6b, using any suitable material removal or material build-up technique (e.g., etching, machining or the like for removal, or plating, physical vapor deposition, chemical vapor deposition, plasma deposition, coating, spraying, laminating with or without adhesive or the like for build-up of spaced walls (not shown) for defining a trench).

According to FIG. 6c, the resonator 412 is placed in the trench so that the free portion projects away from the first layer 462. Though it may be possible to mechanically fasten the resonator into the trench, or to adhesively bond It in place, FIG. 6d illustrates the placement of a second layer 464 over at least a portion of the first layer 462. The second layer may be fabricated on the first layer using any suitable technique such as attaching a preformed layer, such as by laminating with or without an adhesive, plating, physical vapor deposition, chemical vapor deposition, plasma deposition, coating, spraying, or the like. At this point the multi-layer holder 460 is complete and may be implemented into a further assembly. In FIG. 6e, there is shown one illustration of how the holder 460 may be incorporated into a further assembly, such as by attachment (e.g., via welding, adhesive bonding, wire bonding or the like). In the embodiment of FIG. 6e, a shield device 466 is fabricated to include a protective shield for the free portion of the resonator, while still maintaining the free portion 414 exposed for sensing. Thus, a lower portion 468 is assembled with an upper portion 470 about the resonator 412. Either or both of the lower portion 468 or the upper portion 470 may include a window that exposes the free end for sensing. The lower portion 468, the upper portion 470 or both may be pre-fabricated to include a suitable cavity 472 for receiving the resonator. The lower portion 468 and the upper portion 470 might also be fabricated separately, or as a single unit (e.g., as a molded plastic clam-shell type package). Though shown in FIG. 6e as being carried by a common platform 412, the holder 460 and shield device 466 may be maintained upon separate support surfaces.

FIG. 7 illustrates a side view of an assembly 510 in which a sensor 570 including a resonator is attached directly to another device, particularly an ASIC device 572. Though shown mounted on an outer surface 574 of the ASIC device 572, the sensor may penetrate through such an outer surface to an interior of the ASIC device. Attachment of the sensor to the ASIC device may be by any suitable technique, such as (without limitation) via welding, adhesive bonding, wire bonding or the like. The sensor 570 may simply include a resonator, or it may also be an assembly that includes additional packaging, such as that depicted In the various other embodiments as shown herein (e.g., as in FIGS.1-6d and 8a-8d).

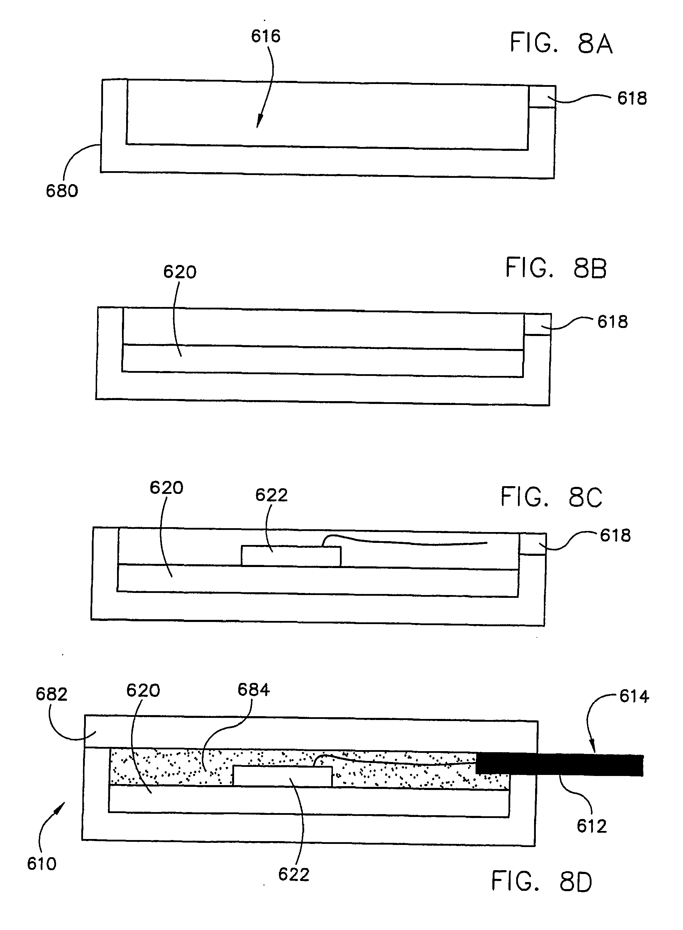

Turning now to FIGS. 8a-8d, there is shown yet another embodiment of the present invention in which an assembly 610 includes a first portion 680 and a second portion 682 that are attached together in a later-stage assembly step to enclose the assembly while leave a free portion 614 of resonator 612 exposed for sensing. It should be realized that a suitable shield device, such as shown in FIG. 6e may likewise be employed with the present assembly 612. As seen in FIG. 8a, preferably at least one (or both) of the first or second portions will be configured to include a well 616 for receiving components. Optionally, it may also have a suitable wall structure for defining a opening 618, through or on which the resonator 612 may be placed.

In FIG. 8b a first internal component 620 is placed in the well 616. In the step shown in FIG. 8c, a second internal component 622 (which may be pre-attached to or otherwise integrated into the first component, or omitted altogether) is placed in the well 616. Optionally, an electrical conductor 624 (e.g., wires, traces or otherwise) is attached to either or both of the first or second internal components. Pursuant to FIG. 8d, the resonator is connected with the electrical conductor, the second portion 682 is secured to the first portion (e.g., mechanically, by welding, by adhesive bonding or otherwise), and the well is optionally filled with an inert substance 684 (e.g., a gas, a gel, a liquid or otherwise).

Thereafter, the resulting assembly can be further handled (e.g., for placement on a common platform with an ASIC, for placement on an ASIC (as In FIG. 7) or otherwise), such as for attachment to a platform or to hardware for securing it in place in the intended sensing environment. It should be recognized that either of the first or second components might be an ASIC component.

As discussed In the above, in certain embodiments of the present invention it is preferable that a spacing be maintained between the free portion of any resonator and any adjacent structure. The amount of such spacing is not critical, and may vary depending upon the nature of the particular application. However, in the context of a preferred embodiment employing a tuning fork resonator, in order to help avoid the potential for electrical interference with the operation of the resonator, it is preferred that the spacing be at least one width of a tine of the tuning fork.

In any of the embodiments discussed herein, it is also possible that one pr more additional structures are added to the assembly in order to help improve performance or functionality of the resulting device. For example, in one embodiment, the assembly includes a well or other suitable passage that is in direct fluid communication with the resonator and into which a calibration fluid can be introduced for the purpose of calibrating the sensor. It is also contemplated that the assembly may include a structure that substantially envelops the resonator for assisting to preserve electrical characteristics. For example, a wire mesh or other like cover may be provided about the resonator as a Faraday cage. Other alternative structures may also be employed, such as the metallization of a region that at least partially surround the resonator. This can be employed in any of the above embodiments, including for example the embodiments of FIGS.1-3 that employ a housing structure, or the embodiments of FIGS. 6a-6e and 8a-8d that might employ a shield device (which shield device, of course, may also be adapted for employment with a housing such as in FIGS. 1-3).

It should be appreciated that the functions that are described herein may be performed as part of a single integrated package, or they may be spread over a plurality of different components that may or may not be supported by a common platform.

Further, the present invention also contemplates the incorporation of one or more additional sensors apart from the resonator sensors described herein. For example, one embodiment contemplates the inclusion in an assembly of a sensor or other device for monitoring temperature, such as a thermistor, an RTD or other such temperature sensor. In this manner, it is contemplated that all of the data necessary for a calculation of viscosity, for example, can be obtained in a single assembly, which in turn can be Interfaced with a suitable microprocessor.

It should be recognized that the present invention contemplates not only the methods employed for fabricating the assemblies of the present invention, but also the assemblies themselves, independent of the methods employed for fabrication. Thus the present invention contemplates sensor assemblies that include a resonator having a free portion with a sensing surface is incorporated onto a platform, wherein components of the sensor are physically shielded from harsh operating conditions, a spadng is maintained between the free portion of the resonator and the platform, and the sensing surface of the resonator is exposed for sensing.

The assemblies of the present invention may also be provided with suitable hardware for securing the assembly to another component, such as hardware for securing the assembly in an automotive vehicle engine or within a conduit, tank, or other structure for carrying a fluid.

It should also be recognized that even if not described in connection with one of the above embodiments, it is possible to combine steps from one of the embodiments shown with the other embodiments shown. For example, for each of the embodiments, it is contemplated that a protective layer may be applied over at least a portion of the resulting assemblies. This can be done by overmolding, coating or other art-disclosed techniques for protecting delicate hardware from the effects of intended operating conditions. Additionally, even if not shown, each of the embodiments might be further assembled onto a platform alone or with other components using art-disclosed attachment techniques (e.g., via welding, adhesive bonding, wire bonding or the like).

It should also be recognized that single layers shown herein may be split into additional layers to form more than the number of layers shown, or combined with other layers to form less than the number of layers shown. All such variations are contemplated within the scope of the present invention.

Further, the disclosure herein of a particular shape or orientation of a component is not Intended as limiting. Though it is expected that many embodiments will employ relatively thin and flat structures, the components may also be fabricated or arranged so that the resulting structure has a curvature, a relatively thick profile, or a combination thereof (e.g., an assembly including a resonator and protective carrier structure that has a ratio of its largest to its smallest dimension of about 1:1 to about 4:1).

Finally, the omission herein in any particular embodiment of any discussion of electrical connections or other hardware for signally connecting the assemblies herein with other electronic components is not intended as limiting. It should be recognized that a variety of art-disclosed hardware configuration may be employed In each instance, such as the use of wires, traces, conductive metal filled vias, combinations thereof or the like.

As discussed above, the sensor may be a mechanical resonator, such as is disclosed for example in commonly owned, co-pending application entitled "performance Tuned Mechanical Resonators For Sensing" (attorney docket No. 1012-189, claiming benefit of U.S. provisional application no. 60/452,292). The mechanical resonator has a resonator portion for resonating in a fluid and an electrical connection between the resonator portion and a source of a signal input The resonator portion, the electrical connection or both include a base material and a performance-tuning material. The base material may include quartz, lithium niobate, zinc oxide, lead zirconate titanate (PZT), gallo-germanates (e.g., Langasite (La₃Ga₅SiO₁₄), Langanite, or Langatate), diomignite (lithium tetraborate), bismuth germanium oxide gallium phosphate, gallium nitride, aluminum nitride or combinations thereof. The performance-tuning material may include polymers, ceramics, metals, metal carbides or nitrides, diamond, diamond-like carbon, and combinations thereof.

the mechanical resonator may be connected to a measuring system that sends a variable frequency input signal, such as a sinusoidal wave, that sweeps over a predetermined frequency range, preferably less than about 100 kHz (e.g., in the 25-30 kHz range) for a tuning fork resonator and in a higher range for the TSM resonator. The resonator response over the frequency range is then monitored to determine selected physical and electrical properties of the fluid. Absolute values may be obtained if desired, as may relative, comparative or index values. Additionally, it is possible also that the system may be employed with determining whether a certain threshold criteria is met in the fluid being analyzed.

The hardware for the present measuring system may be any suitable hardware. It may include, for example, art-disclosed network analyzers, see, e.g., U.S. Patent Nos. 6,336,353 (Matsiev, et al.)("Method and apparatus for characterizing materials by using a mechanical resonator"); and 6,182,499 (McFarland, et al.) and published U.S. Patent Application No. 20030000291. The hardware might also be part of an application specific integrated circuit (ASIC), such as is disclosed for example in commonly owned, co-pending application entitled "integrated measurement assembly for a machine fluid sensing system" (U.S. patent application no. 10/452,264) as disclosed in commonly owned, co-pending application entitled "Application specific integrated circuitry for controlling analysis of a fluid" (attorney docket no. SYMXP001.P), claiming benefit of U.S. provisional application no. 60/419,404) as disposed in co-owned, co-pending application entitled "Resonator Sensor Assembly" (attorney docket nos. 1012-188 and 1012-188WO2, claiming benefit of U.S. provisional 60/456,517), as disclosed in co-owned, co-pending application entitled "Environmental Control System Fluid Sensing System And Method" (international patent application no. US03/32983) or as disclosed in co-owned, co-pending application entitled "Mechanical Resonators" (attorney docket nos. 1012-189 and 1012-189WO; claiming benefit of U.S. provisional application no. 60/452,292).

Generally, the hardware for measuring system provides a versatile fluid sensing system. More specifically, the hardware provides a fluid sensing system for machines that rely upon the presence, conditions or both of a fluid to maintain efficient operation, such as (without limitation) a synthetic or natural engine oil. In an automotive application, the user is provided with the ability to determine the actual condition (e.g. or the relative deviation of the state of the engine oil from its initial or virgin state) of the engine oil at any particular time, including during operation. Alternatively, in conjunction with assessing fluid condition, the hardware may also determine the amount of fluid remaining in a reserve of an assembly. This advantageously allows machine operators to extend the duration between fluid service events, while helping to assure continued operational integrity of a machine.

Any dynamic assembly that depends on fluids to operate (e.g., where friction and heat are of a concern), will benefit from hardware capable sensing the state of a fluid. For instance, the ability to dynamically monitor fluid condition, process data obtained from the monitoring, and report characteristics of the fluid to an Interface or operator can have many applications. Assemblies that may benefit from the defined embodiments of the present invention are many, and can include without limitation, engines in general, automobiles, heavy machinery, military equipment, airplane parts, oil drilling, exploration and production well logging, oil refining, pipeline and quality control applications, marine transportation, sub-sea exploration and aerospace related equipment, or any other fluid containing application. In addition, contemplated methods include a step of assembling the hardware into a device that is incorporated into engines in general, automobiles, heavy machinery, military equipment, airplanes, oil drilling, exploration and production well logging equipment, oil refining, pipeline and quality control equipment, marine transportation equipment, sub-sea exploration and aerospace reflated equipment, or any other equipment that utilizes fluids for operations.

In the automotive field, numerous components require lubrication, which is not limited to engine oil. For example, other automotive components may include the transmission, the transfer case, the differential, etc. Still further, the sensing system may further be used to determined the quality and amount of other fluids which are not necessarily used predominantly as a lubricant, including: brake fluids, steering fluids, antifreeze fluids, refrigerant fluids, windshield washer fluids, or any other fluid located in an automotive system.

In one embodiment of suitable hardware, an oil sensing system is used to determine the component characteristics and amount of engine oil. In an automotive application, the oil sensing system will provide a user, at a minimum, with a warning as to the need to change the oil (such as owing to the presence of contaminants, a breakdown or loss of useful ingredients or otherwise). In such an application, the warning is essentially informing the user of the automobile that the engine oil has reaches a quality level or condition that is lower than that recommend by the automobile's manufacturer (or set by the oil manufacturer).

The fluid sensing system preferably uses a mechanical resonator as the fluid sensor in accordance with the present invention. The mechanical resonator is at least partially contained in the fluid under-test. To monitor the condition of the fluid under-test (i.e., engine oil), the mechanical resonator is provided with electrical energy through a frequency generator. The frequency generator is designed to apply a frequency signal (to the mechanical resonator) that is swept over a predetermined frequency range. Electronics are then used to detect the response signal from the mechanical resonator and process the signal to ascertain characteristics of the fluid under-test. In an embodiment of the fluid sensing system, the electronics are provided in the form of an application specific integrated circuit (ASIC). In addition, the hardware might also be part of or include a field programmable gate array (FPGA).

In the foregoing description, numerous specific details are set forth In order to provide a thorough understanding of the fluid sensing system, hardware and mechanical resonator that may be used with the present invention. It will be apparent, however, to one skilled in the art that the present invention may be practiced without some or all of these specific details. In other instances, well known process steps have not been described in detail in order not to unnecessarily obscure the present invention.

The manner of operating the resonators and sensors of the present Invention may vary. In one embodiment, the sensor is operated continuously. In another, it may be intermittently operated. It is possible that the sensor may be operated only in preselected conditions, such as prior to starting vehicle operation, upon starting vehicle operation, during vehicle operation upon concluding vehicle operation, while the vehicle travels at a substantially constant velocity, while the vehicle accelerates or decelerates, or otherwise.

It should be understood that various alternatives to the embodiments of the invention described herein may be employed in practicing the invention. It is intended that the following claims define the scope of the invention and that the methods and apparatus within the scope of these claims and their equivalents be covered thereby. To the extent that the particular combinations of steps and materials covered by the following claims are not disclosed In the specification, the combinations of steps and materials are incorporated by reference into the specification.

## Claims

1. A method of packaging a sensor comprising a flexural resonator (12, 112, 212), comprising: affixing said flexural resonator (12, 112, 212) having an exposed sensing surface (14, 114, 214) to a platform (16, 116, 318) wherein a spaced relationship is created between the exposed sensing surface (14, 114, 214) and the platform (16, 116, 318) so that the exposed sensing surface (14, 114, 214) of the flexural resonator (12, 112, 212) can displace a fluid in contact therewith, **characterised by**:
- blocking the exposed sensing surface (14,114,214) with a removable protective barrier (350),
- applying a protective layer (328) covering at least part of the platform (16,116,318) and part of the flexural resonator (12,112,212), the removable protective barrier (350) preventing the protective layer (328) from contacting the exposed sensing surface (14,114,214), and
- removing the removable protective barrier (350), such that the exposed sensing surface (14,114,214) can displace the fluid in contact therewith.

2. The method according to claim 1, wherein the protective layer (328) is selectively applied by spraying, brushing, over molding, laminating or by combinations thereof.

3. The method according to any of claims 1-2, wherein the removable protective barrier (350) is a reusable or consumable barrier.

4. The method according to claim 3, wherein the removable protective barrier is a consumable barrier that comprises a polymer, starch, wax, salt or other dissolvable crystal, low melting point metal, a photoresist, or another sacrificial material.

5. The method according to claim 3, wherein the removable protective barrier is a reusable barrier that comprises a relatively soft material that will not plastically deform the flexural resonator if it contacts the flexural resonator.

6. The method according to any of claims 1-5, further comprising at least partially protecting the flexural resonator from the ambient or operational conditions through the use of a housing.

7. The method according to any of claims 1-6, further comprising affixing an integrated circuit to the platform, the integrated circuit being in electrical communication with the flexural resonator.

8. The method according to any of claims 1-7, further comprising operating the flexural resonator at temperatures between about -60° C and about 300° C.

9. The method according to any of claims 1-7, further comprising operating. the flexural resonator at temperatures between about -40° C and about

10. The method according to any of claims 1-9, wherein the sensor affixed to the platform has a length or width smaller than about 5 mm.

11. The method according to any of claims 1-9, wherein the sensor affixed to the platform has a length or width smaller than about 1 mm.

12. The method according to any of claims 1-11, wherein the sensor package has a volume of about less than about 15 cm³.

13. The method according to any of claims 1-11, wherein the sensor package has a volume of about less than about 10 cm³.

14. The method according to any of claims 1-13, wherein the sensor package has a footprint of about less than about 40 cm².

15. The method according to any of claims 1-13, wherein the sensor package has a footprint of about less than about 20 cm².

16. The method according to any of claims 1-15, further comprising at least partially preserving electrical characteristics of the sensor through the use of a Faraday cage.

17. The method according to any of claim 1-16, further comprising placing the sensor package in an engine, a transmission, a transfer case, a differential, a brake system, a steering system, an antifreeze system, a heating and cooling system, a washer system, or combinations thereof.

18. The method according to any of claims 1-17, further comprising placing the sensor package in a lubricant, a brake fluids, a steering fluid, an antifreeze fluid, a refrigerant fluid, a washer fluid, or combinations thereof.

19. A package for protecting a sensor comprising a flexural resonator (12, 112, 212), comprising: a flexural resonator on a platform (16, 116, 318), the flexural resonator (12, 112, 212) having one or more exposed sensing surfaces (14, 114, 214) in spaced relationship to the platform (16, 116, 318) so that the exposed sensing surface (14, 114, 214) can displace a fluid in contact therewith to determine one or more characteristics of the fluid, **characterised by** :
a protective layer (328) covering part of the flexural resonator (12, 112, 212) and at least part of the platform (16, 116, 318) while maintaining free the exposed sensing surface (14, 114, 214) such that the exposed sensing surface (14, 114, 214) can displace the fluid in contact therewith.

20. The package of claim 19,
wherein the protective layer (328) is selectively applied sprayed material, brushed material, over molded material, laminated material or by combinations thereof.

21. The package of claim 19 or 20, further comprising a housing spaced from the exposed sensing surface.

22. The package according to claim 21, wherein the housing comprises a plurality of walls that substantially surround the flexural resonator while maintaining exposure of the exposed sensing surface to the fluid.

23. The package according to any of claims 19-22, further comprising an integrated circuit, the integrated circuit being in electrical communication with the flexural resonator.

24. The package according to any of claims 19-23, wherein the flexural resonator is capable of operating at temperatures between about -60° C and about 300° C.

25. The package according to any of claims 19-24, wherein the flexural resonator is capable of operating at temperatures between about -40° C and about 170°C.

26. The package according to any of claims 19-25, wherein the flexural resonator affixed to the platform has a length or width smaller than about 5 mm.

27. The package according to any of claims 19-26, wherein the flexural resonator affixed to the platform has a length or width smaller than about 1 mm.

28. The package according to any of claims 19-27, wherein the package has a volume of about less than about 15 cm³.

29. The package according to any of claims 19-28, wherein the package has a volume of about less than about 10 cm³.

30. The package according to any of claims 19-29, wherein the package has a footprint of about less than about 40 cm²,

31. The package according to any of claims 19-30, wherein the package has a footprint of about less than about 20 cm².

32. The package according to any of claims 19-31, wherein the mechanical resonator is selected from tuning forks, cantilevers, bimorphs, or unimporphs, membrane resonators, or torsional resonators.

33. The package according to any of claims 19-32 wherein in the package is adapted for use in engines, automobiles, heavy machinery, military equipment, airplane parts, oil drilling, exploration and production well logging, oil refining, pipeline and quality control equipment, marine transportation, or sub-sea exploration and aerospace related equipment.

34. The package according to any of claim 19-33, further comprising a Faraday cage.

35. The package according to any of claim 22-34, wherein the package is adapted for use in an engine, a transmission, a transfer case, a differential, a brake system, a steering system, an antifreeze system, a heating and cooling system, and a washer system.

36. The package according to any of claim 19-35, wherein the package is adapted for use in lubricants, brake fluids, steering fluids, antifreeze fluids, refrigerant fluids, and washer fluids.

37. The method according to any of claims 1-18, wherein the flexural resonator is a tuning fork.

38. The package according to any of claims 19-36, wherein the flexural resonator is a tuning fork.

## Patentansprüche

1. Verfahren zum Packen eines Sensors, der einen Biegeschwinger (12, 112, 212) umfasst, umfassend: Fixieren des Biegeschwingers (12, 112, 212) mit einer frei liegenden Abtastfläche (14, 114, 214) an einer Plattform (16, 116, 318), wobei eine beabstandete Beziehung zwischen der frei liegenden Abtastfläche (14, 114, 214) und der Plattform (16, 116, 318) hergestellt wird, so dass die frei liegende Abtastfläche (14, 114, 214) des Biegeschwingers (12, 112, 212) eine Flüssigkeit in Kontakt damit verdrängen kann, **gekennzeichnet durch**:
- Blockieren der frei liegenden Abtastfläche (14,114,214) mit einer entfernbaren Schutzbarriere (350),
- Aufbringen einer Schutzschicht (328), die wenigstens einen Teil der Plattform (16, 116, 318) und einen Teil des Biegeschwingers (12, 112, 212) abdeckt, wobei die entfernbare Schutzbarriere (350) verhindert, dass die Schutzschicht(328) die frei liegende Abtastfläche (14, 114, 214) berührt, und
- Entfernen der entfernbaren Schutzbarriere (350), derart dass die frei liegende Abtastfläche (14, 114, 214) die Flüssigkeit in Kontakt damit verdrängen kann.

2. Verfahren nach Anspruch 1, wobei die Schutzschicht (328) selektiv durch Sprühen, Bürsten, Überspritzen, Laminieren oder durch Kombinationen davon aufgebracht wird.

3. Verfahren nach einem der Ansprüche 1 bis 2, wobei die entfernbare Schutzbarriere (350) eine wiederverwendbare oder verbrauchbare Barriere ist.

4. Verfahren nach Anspruch 3, wobei die entfernbare Schutzbarriere eine verbrauchbare Barriere ist, die ein Polymer, Stärke, Wachs, Salz oder ein anderes lösbares Kristall, ein Metall mit niedrigem Schmelzpunkt, ein Photoresist oder ein anderes Opfermaterial umfasst.

5. Verfahren nach Anspruch 3, wobei die entfernbare Schutzbarriere eine wiederverwendbare Barriere ist, die ein verhältnismäßig weiches Material umfasst, das den Biegeschwinger nicht plastisch verformt, wenn es mit dem Biegeschwinger in Kontakt tritt.

6. Verfahren nach einem der Ansprüche 1 bis 5, ferner umfassend ein wenigstens teilweises Schützen des Biegeschwingers vor Umgebungs- oder Betriebsbedingungen durch die Verwendung eines Gehäuses.

7. Verfahren nach einem der Ansprüche 1 bis 6, ferner umfassend ein Fixieren einer integrierten Schaltung an der Plattform, wobei die integrierte Schaltung mit dem Biegeschwinger in elektrischer Verbindung steht.

8. Verfahren nach einem der Ansprüche 1 bis 7, ferner umfassend ein Betreiben des Biegeschwingers bei Temperaturen zwischen etwa -60 °C und etwa 300 °C.

9. Verfahren nach einem der Ansprüche 1 bis 7, ferner umfassend ein Betreiben des Biegeschwingers bei Temperaturen zwischen etwa -40 °C und etwa 170 °C.

10. Verfahren nach einem der Ansprüche 1 bis 9, wobei der an der Plattform fixierte Sensor eine Länge oder Breite aufweist, die kleiner als etwa 5 mm ist.

11. Verfahren nach einem der Ansprüche 1 bis 9, wobei der an der Plattform fixierte Sensor eine Länge oder Breite aufweist, die kleiner als etwa 1 mm ist.

12. Verfahren nach einem der Ansprüche 1 bis 11, wobei die Sensorpackung ein Volumen von weniger als etwa 15 cm³ aufweist.

13. Verfahren nach einem der Ansprüche 1 bis 11, wobei die Sensorpackung ein Volumen von weniger als etwa 10 cm³ aufweist.

14. Verfahren nach einem der Ansprüche 1 bis 13, wobei die Sensorpackung eine Stellfläche von weniger als etwa 40 cm² aufweist.

15. Verfahren nach einem der Ansprüche 1 bis 13, wobei die Sensorpackung eine Stellfläche von weniger als etwa 20 cm² aufweist.

16. Verfahren nach einem der Ansprüche 1 bis 15, ferner umfassend ein wenigstens teilweises Bewahren von elektrischen Charakteristiken des Sensors durch die Verwendung eines Faraday'schen Käfigs.

17. Verfahren nach einem der Ansprüche 1 bis 16, ferner umfassend ein Anordnen der Sensorpackung in einem Motor, einem Übersetzungsgetriebe, einem Verteilergetriebe, einem Differenzialgetriebe, einem Bremssystem, einem Lenksystem, einem Gefrierschutzsystem, einem Heiz- und Kühlsystem, einer Scheibenwaschanlage oder Kombinationen davon.

18. Verfahren nach einem der Ansprüche 1 bis 17, ferner umfassend ein Anordnen der Sensorpackung in einem Schmiermittel, einer Bremsflüssigkeit, einer Lenkflüssigkeit, Gefrierschutzflüssigkeit, einer Kühlflüssigkeit, einer Scheibenwaschflüssigkeit oder Kombinationen davon.

19. Packung zum Schützen eines Sensors, der einen Biegeschwinger (12, 112, 212) umfasst, umfassend: einen Biegeschwinger auf einer Plattform (16, 116, 318), wobei der Biegeschwinger (12, 112, 212) eine oder mehrere frei liegende Abtastflächen (14, 114, 214) in beabstandeter Beziehung zur Plattform (16, 116, 318) aufweist, so dass die frei liegende Abtastfläche (14, 114, 214) Flüssigkeit in Kontakt damit verdrängen kann, um eine oder mehrere Charakteristiken der Flüssigkeit zu bestimmen, **gekennzeichnet durch**:
eine Schutzschicht (328), die einen Teil des Biegeschwingers (12, 112, 212) und wenigstens einen Teil der Plattform (16, 116, 318) abdeckt, während sie die frei liegende Abtastfläche (14, 114, 214) frei hält, derart dass die frei liegende Abtastfläche (14, 114, 214) die Flüssigkeit in Kontakt damit verdrängen kann.

20. Packung nach Anspruch 19, wobei die Schutzschicht (328) selektiv durch Sprühen, Bürsten, Überspritzen, Laminieren oder durch Kombinationen davon aufgebracht wird.

21. Packung nach Anspruch 19 oder 20, ferner umfassend ein Gehäuse, das von der frei liegenden Abtastfläche beabstandet ist.

22. Packung nach Anspruch 21, wobei das Gehäuse eine Mehrzahl von Wänden umfasst, die den Biegeschwinger im Wesentlichen umgeben, während sie die Exponierung der frei liegenden Abtastfläche gegenüber der Flüssigkeit aufrechterhalten.

23. Packung nach einem der Ansprüche 19 bis 22, ferner umfassend eine integrierte Schaltung, wobei die integrierte Schaltung mit dem Biegeschwinger in elektrischer Verbindung steht.

24. Packung nach einem der Ansprüche 19 bis 23, wobei der Biegeschwinger bei Temperaturen zwischen etwa -60 °C und etwa 300 °C betrieben werden kann.

25. Packung nach einem der Ansprüche 19 bis 24, wobei der Biegeschwinger bei Temperaturen zwischen etwa -40 °C und etwa 170 °C betrieben werden kann.

26. Packung nach einem der Ansprüche 19 bis 25, wobei der an der Plattform fixierte Biegeschwinger eine Länge oder Breite aufweist, die kleiner als etwa 5 mm ist.

27. Packung nach einem der Ansprüche 19 bis 26, wobei der an der Plattform fixierte Biegeschwinger eine Länge oder Breite aufweist, die kleiner als etwa 1 mm ist.

28. Packung nach einem der Ansprüche 19 bis 27, wobei die Packung ein Volumen von weniger als etwa 15 cm³ aufweist.

29. Packung nach einem der Ansprüche 19 bis 28, wobei die Packung ein Volumen von weniger als etwa 10 cm³ aufweist.

30. Packung nach einem der Ansprüche 19 bis 29, wobei die Packung eine Stellfläche von weniger als etwa 40 cm² aufweist.

31. Packung nach einem der Ansprüche 19 bis 30, wobei die Packung eine Stellfläche von weniger als etwa 20 cm² aufweist.

32. Packung nach einem der Ansprüche 19 bis 31, wobei der mechanische Schwinger aus Stimmgabeln, Kontaktfedern, Bimorphen oder Unimorphen, Membranschwingern oder Drehschwingern ausgewählt ist.

33. Packung nach einem der Ansprüche 19 bis 32, wobei die Packung zur Verwendung in Motoren, Kraftfahrzeugen, Großmaschinen, militärischer Ausrüstung, Flugzeugteilen, Erdölbohrung, Aufschließungs- und Produktionsbohrlochmessung, Erdölraffination, Rohrleitungs- und Qualitätskontrollgeräten, Seeverkehr oder Geräten in Bezug auf die Meeresbodenerforschung und Raum- und Luftfahrt ausgelegt ist.

34. Packung nach einem der Ansprüche 19 bis 33, ferner umfassend einen Faraday'schen Käfig.

35. Packung nach einem der Ansprüche 22 bis 34, wobei die Packung zur Verwendung in einem Motor, einem Übersetzungsgetriebe, einem Verteilergetriebe, einem Differenzialgetriebe, einem Bremssystem, einem Lenksystem, einem Gefrierschutzsystem, einem Heiz- und Kühlsystem und einer Scheibenwaschanlage ausgelegt ist.

36. Packung nach einem der Ansprüche 19 bis 35, wobei die Packung zur Verwendung in Schmiermitteln, Bremsflüssigkeiten, Lenkflüssigkeiten, Gefrierschutzflüssigkeiten, Kühlflüssigkeiten und Scheibenwaschflüssigkeiten ausgelegt ist.

37. Verfahren nach einem der Ansprüche 1 bis 18, wobei es sich bei dem Biegeschwinger um eine Stimmgabel handelt.

38. Packung nach einem der Ansprüche 19 bis 36, wobei es sich bei dem Biegeschwinger um eine Stimmgabel handelt.

## Revendications

1. Procédé d'encapsulation d'un capteur comprenant un résonateur à flexion (12, 112, 212), consistant à : fixer ledit résonateur à flexion (12, 112, 212) ayant une surface de détection exposée (14, 114, 214) sur une plate-forme (16, 116, 318), dans lequel une relation espacée est créée entre la surface de détection exposée (14, 114, 214) et la plate-forme (16, 116, 318) afin que la surface de détection exposée (14, 114, 214) du résonateur à flexion (12, 112, 212) puisse déplacer un fluide en contact avec elle, **caractérisé en ce qu'**il consiste à :
- bloquer la surface de détection exposée (14, 114, 214) avec une barrière de protection amovible (350),
- appliquer une couche de protection (328) couvrant au moins une partie de la plate-forme (16, 116, 318) et une partie du résonateur à flexion (12, 112, 212), la barrière de protection amovible (350) empêchant la couche de protection (328) d'entrer en contact avec la surface de détection exposée (14, 114, 214), et
- retirer la barrière de protection amovible (350), de telle sorte que la surface de détection exposée (14, 114, 214) puisse déplacer le fluide en contact avec elle.

2. Procédé selon la revendication 1, dans lequel la couche de protection (328) est appliquée sélectivement par pulvérisation, brossage, surmoulage, stratification ou par des combinaisons de ceux-ci.

3. Procédé selon l'une quelconque des revendications 1 et 2, dans lequel la barrière de protection amovible (350) est une barrière réutilisable ou consommable.

4. Procédé selon la revendication 3, dans lequel la barrière de protection amovible est une barrière consommable qui comprend un polymère, un amidon, une cire, un sel ou autre cristal soluble, un métal à température de fusion basse, une photorésine ou un autre matériau sacrificiel.

5. Procédé selon la revendication 3, dans lequel la barrière de protection amovible est une barrière réutilisable qui comprend un matériau relativement tendre qui ne déformera pas plastiquement le résonateur à flexion s'il entre en contact avec le résonateur à flexion.

6. Procédé selon l'une quelconque des revendications 1 à 5, consistant en outre à protéger au moins partiellement le résonateur à flexion des conditions ambiantes ou opérationnelles grâce à l'utilisation d'un logement.

7. Procédé selon l'une quelconque des revendications 1 à 6, consistant en outre à fixer un circuit intégré sur la plate-forme, le circuit intégré étant en communication électrique avec le résonateur à flexion.

8. Procédé selon l'une quelconque des revendications 1 à 7, consistant en outre à utiliser le résonateur à flexion à des températures comprises entre - 60°C environ et 300°C environ.

9. Procédé selon l'une quelconque des revendications 1 à 7, consistant en outre à utiliser le résonateur à flexion à des températures comprises entre - 40°C environ et 170°C environ.

10. Procédé selon l'une quelconque des revendications 1 à 9, dans lequel le capteur fixé à la plate-forme a une longueur ou largeur inférieure à 5 mm environ.

11. Procédé selon l'une quelconque des revendications 1 à 9, dans lequel le capteur fixé à la plate-forme a une longueur ou largeur inférieure à 1 mm environ.

12. Procédé selon l'une quelconque des revendications 1 à 11, dans lequel le boîtier de capteur a un volume environ inférieur à 15 cm³ environ.

13. Procédé selon l'une quelconque des revendications 1 à 11, dans lequel le boîtier de capteur a un volume environ inférieur à 10 cm³ environ.

14. Procédé selon l'une quelconque des revendications 1 à 13, dans lequel le boîtier de capteur a un encombrement environ inférieur à 40 cm² environ.

15. Procédé selon l'une quelconque des revendications 1 à 13, dans lequel le boîtier de capteur a un encombrement environ inférieur à 20 cm² environ.

16. Procédé selon l'une quelconque des revendications 1 à 15, consistant en outre à préserver au moins partiellement les caractéristiques électriques du capteur grâce à l'utilisation d'une cage de Faraday.

17. Procédé selon l'une quelconque des revendications 1 à 16, consistant en outre à placer le boîtier de capteur dans un moteur, une transmission, une boîte de transfert, un différentiel, un système de freinage, un système de direction, un système antigel, un système de chauffage et de refroidissement, un système de lave-glace, ou des combinaisons de ceux-ci.

18. Procédé selon l'une quelconque des revendications 1 à 17, consistant en outre à placer le boîtier de capteur dans un lubrifiant, un liquide de freinage, un fluide de direction, un fluide antigel, un fluide frigorigène, un liquide lave-glace, ou des combinaisons de ceux-ci.

19. Boîtier pour protéger un capteur comprenant un résonateur à flexion (12, 112, 212), comprenant : un résonateur à flexion sur une plate-forme (16, 116, 318), le résonateur à flexion (12, 112, 212) ayant une ou plusieurs surface(s) de détection exposée(s) (14, 114, 214) en relation espacée par rapport à la plate-forme (16, 116, 318) afin que la surface de détection exposée (14, 114, 214) puisse déplacer un fluide en contact avec elle pour déterminer une ou plusieurs caractéristique(s) du fluide, **caractérisé par** :
une couche de protection (328) couvrant une partie du résonateur à flexion (12, 112, 212) et au moins une partie de la plate-forme (16, 116, 318) tout en maintenant libre la surface de détection exposée (14, 114, 214) de telle sorte que la surface de détection exposée (14, 114, 214) puisse déplacer le fluide en contact avec elle.

20. Boîtier selon la revendication 19, dans lequel la couche de protection (328) est un matériau pulvérisé, un matériau brossé, un matériau surmoulé, un matériau stratifié appliqué sélectivement ou des combinaisons de ceux-ci.

21. Boîtier selon la revendication 19 ou 20, comprenant en outre un logement espacé par rapport à la surface de détection exposée.

22. Boîtier selon la revendication 21, dans lequel le logement comprend une pluralité de parois qui entourent sensiblement le résonateur à flexion tout en maintenant l'exposition de la surface de détection exposée au fluide.

23. Boîtier selon l'une quelconque des revendications 19 à 22, comprenant en outre un circuit intégré, le circuit intégré étant en communication électrique avec le résonateur à flexion.

24. Boîtier selon l'une quelconque des revendications 19 à 23, dans lequel le résonateur à flexion est capable de fonctionner à des températures comprises entre - 60°C environ et 300°C environ.

25. Boîtier selon l'une quelconque des revendications 19 à 24, dans lequel le résonateur à flexion est capable de fonctionner à des températures comprises entre -40°C environ et 170°C environ.

26. Boîtier selon l'une quelconque des revendications 19 à 25, dans lequel le résonateur à flexion fixé à la plate-forme a une longueur ou largeur inférieure à 5 mm environ.

27. Boîtier selon l'une quelconque des revendications 19 à 26, dans lequel le résonateur à flexion fixé à la plate-forme a une longueur ou largeur inférieure à 1 mm environ.

28. Boîtier selon l'une quelconque des revendications 19 à 27, le boîtier ayant un volume environ inférieur à 15 cm³ environ.

29. Boîtier selon l'une quelconque des revendications 19 à 28, le boîtier ayant un volume environ inférieur à 10 cm³ environ.

30. Boîtier selon l'une quelconque des revendications 19 à 29, le boîtier ayant un encombrement environ inférieur à 40 cm² environ.

31. Boîtier selon l'une quelconque des revendications 19 à 30, le boîtier ayant un encombrement environ inférieur à 20 cm² environ.

32. Boîtier selon l'une quelconque des revendications 19 à 31, dans lequel le résonateur mécanique est choisi parmi les diapasons, les cantilevers, les bimorphes ou unimorphes, les résonateurs à membrane ou les résonateurs en torsion.

33. Boîtier selon l'une quelconque des revendications 19 à 32, le boîtier étant conçu pour être utilisé dans les moteurs, les automobiles, les machines lourdes, les équipements militaires, les pièces d'avions, le forage pétrolier, la diagraphie des puits d'exploration et de production, le raffinage du pétrole, les équipements de pipelines et de contrôle qualité, le transport maritime, ou les équipements relatifs à l'exploration sous-marine et à l'aérospatiale.

34. Boîtier selon l'une quelconque des revendications 19 à 33, comprenant en outre une cage de Faraday.

35. Boîtier selon l'une quelconque des revendications 22 à 34, le boîtier étant conçu pour être utilisé dans un moteur, une transmission, une boîte de transfert, un différentiel, un système de freinage, un système de direction, un système antigel, un système de chauffage et de refroidissement, un système de lave-glace.

36. Boîtier selon l'une quelconque des revendications 19 à 35, le boîtier étant conçu pour être utilisé dans des lubrifiants, liquides de freinage, fluides de direction, fluides antigel, fluides frigorigènes et liquides lave-glace.

37. Procédé selon l'une quelconque des revendications 1 à 18, dans lequel le résonateur à flexion est un diapason.

38. Boîtier selon l'une quelconque des revendications 19 à 36, dans lequel le résonateur à flexion est un diapason.
